# EUROPEAN PATENT SPECIFICATION

(11) **EP 2 022 221 B1**
(45) Date of publication and mention of the grant of the patent: **23.03.2011**
(21) Application number: 07734871.2
(22) Date of filing: 29.03.2007
(51) Int. Cl.: H04L 12/56

(54) **A HYBRID IP/ATM DSLAM AND METHOD OF PROVIDING HYBRID IP/ATM DSL ACCESS MULTIPLEXING**
HYBRID-IP/ATM-DSLAM UND VERFAHREN ZUM BEREITSTELLEN VON HYBRID-IP/ATM-DSL-ZUGANGSMULTIPLEXEN
DSLAM IP/ATM HYBRIDE ET PROCEDE POUR FOURNIR UN MULTIPLEXAGE D'ACCES DSL IP/ATM HYBRIDE

(30) Priority: 31.03.2006 US 393671
(43) Date of publication of application: 11.02.2009
(73) Proprietor: Alcatel Lucent, 75008 Paris (FR)
(72) Inventor: THORNE, Hal, Andrew, Raleigh, North Carolina 27609 (US); AYDIN, Arkin, Nepean, Ontario K2E 7X5 (CA); CONDIE, Mary, Ann, Kanata, Ontario K2T 1E2 (CA); LANDRY, Guy, Kanata, Ontario K2K 2S4 (CA); STORRY, Charles, Michael, Kemptville, Ontario K0G 1J0 (CA); RITONJA, David, William, Carp, Ontario, K0A 1L0 (CA)
(74) Representative: Nicolle, Olivier
(86) International application number: PCT/IB2007/001676
(87) International publication number: WO 2007/113684

(56) References cited:
- EP-A- 1 435 754
- US-B1- 6 493 348

## Description

### FIELD OF THE INVENTION

The invention relates to digital subscriber line access multiplexers (DSLAMs), and more particularly to a hybrid IP/ATM DSLAM and the provision of hybrid IP/ATM DSL access multiplexing.

### BACKGROUND OF THE INVENTION

In providing services to customers, network service providers are constantly trying to provide faster, more robust services, and to provide more bandwidth to customers of their communications networks. ATM is currently deployed heavily for DSL services. Service providers who possess large ATM based network infrastructures are moving towards GigE (Gigabit Ethernet)/IP based infrastructure because of the benefits provided by a GigE/IP based infrastructure including the delivery of enhanced features, more bandwidth, faster service, and more features to customers.

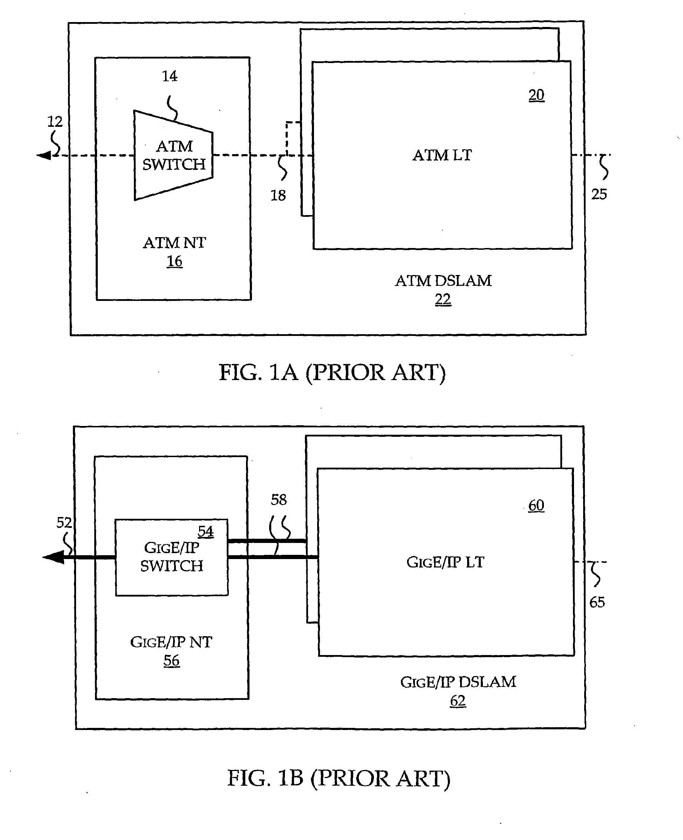

Referring to Figure 1A, a known ATM DSLAM 22 employed in an ATM based infrastructure is discussed. The ATM DSLAM 22 has ATM based network interfaces 12 such as OC12, OC3, DS3, and DS1, and others. The ATM DSLAM 22 is designed to work with ATM network rules. The ATM DSLAM 22 typically provides limited functionalities and relatively low speed services over its user interfaces 25 such as HSI (High Speed Internet) over ADSL (Asymmetric Digital Subscriber Line), and SHDSL (Symmetric High-bit-rate Digital Subscriber Line) to end users. An ATM DSLAM 22 includes a number of ATM LT (line termination) cards 20 connected by an ATM point to multipoint bus 18 to an ATM switch 14 of an ATM NT (network termination) card 16. The ATM based network interfaces 12 are connected to the ATM NT 16.

Existing ATM DSLAMs 22 utilize existing ATM hardware, shelving and ATM LTs 20, are designed to work with existing ATM system interfaces, and form part of an existing ATM network infrastructure.

Referring to Figure 1B, a known GigE/IP DSLAM 62 is discussed. In general, a GigE/IP DSLAM provides more bandwidth both on its network interfaces 52 and user interfaces 65 than an ATM DSLAM does on its network interfaces 12 and user interfaces 25 respectively. GigE/IP DSLAMs also provide more enhanced features in comparison to ATM DSLAMs. GigE/IP DSLAM 62 provides multiple GigE/IP or 10/100 Ethernet IP based network interfaces 52 towards the network which allows it to provide very high speed DSL services such as SHDSL, Voice, and VDSL over user interfaces 65 which allow for such capabilities as TV broadcasting using phone lines. A GigE/IP DSLAM 62 is designed to work with GigE/IP rules and hence existing network equipment based on ATM technology cannot be used with it. The GigE/IP DSLAM 62 includes a number of GigE/IP LT cards 60 connected by a GigE/IP star bus 58 to a GigE/IP switch 54 of a GigE/IP NT card 56. The GigE/IP based network interfaces 52 are connected to the GigE/IP NT 56.

Service providers have thousands of ATM DSLAMs that they want to migrate to GigE/IP DSLAMs in order to migrate from an ATM network infrastructure to a GigE/IP network infrastructure. Service providers would rather not have to resort to dropping new GigE/IP DSLAM systems into their networks as replacements of the ATM DSLAM systems due to the cost of each new GigE/IP DSLAM itself, the cost of empty slots in those GigE/IP DSLAMs during the transition, and the amount of new space required for the new GigE/IP DSLAMs. The service providers would prefer a solution that could support both ATM and GigE/IP system interfaces and help them continue to utilize the shelves and ATM line cards that they have already paid for to facilitate a gradual migration from an ATM network infrastructure to a GigE/IP network infrastructure.

EP 1435754 discloses a converter/bridge between Ethernet bus and UTOPIA bus in single or multiple channels. The converter/bridge includes a first conversion device and a second conversion device for converting Ethernet packet into ATM cells and for converting ATM cells into Ethernet packet. The first conversion device includes a first conversion unit, a combining unit and a first transmitting unit. And the second conversion device includes a receiving unit, a second conversion unit and a second transmitting unit. The present invention provides a low cost and efficient transport between the Ethernet and ATM networks.

### SUMMARY OF THE INVENTION

According to one aspect, the invention provides for a hybrid IP/ATM DSLAM comprising: a GigE/IP communications portion for traffic flowing between a first user interface and a GigE/IP network interface; an ATM communications portion for traffic flowing between a second user interface and an ATM network interface; and an IP/ATM bridge for passing traffic between the GigE/IP communications portion and the ATM communications portion.

In some embodiments the GigE/IP communications portion comprises a GigE/IP switch for switching GigE/IP traffic, in which the ATM communications portion comprises an ATM switch for switching ATM traffic, and in which the IP/ATM bridge comprises an inter-working function (IWF) element connected to said GigE/IP switch and connected to said ATM switch, said IWF element for passing network traffic between the GigE/IP switch and the ATM switch.

In some embodiments the IWF element is adapted to: recast GigE/IP traffic received from the GigE/IP switch into crossover ATM traffic; recast ATM traffic received from the ATM switch into crossover GigE/IP traffic; transmit crossover ATM traffic if any to said ATM switch; and transmit crossover GigE/IP traffic if any to said GigE/IP switch.

In some embodiments the ATM connection portion is adapted to accept standard ATM hardware and provide a standard ATM system interface and in some embodiments the ATM communication portion comprises a standard ATM LT card slot and a standard ATM network interface.

According to a second aspect the invention provides for a hybrid IP/ATM DSLAM comprising: a GigE/IP switch for switching traffic flowing between a first user interface and a GigE/IP network interface; an inter-working function (IWF) element; a GigE/IP connection coupling said GigE/IP switch to said IWF element; an ATM switch for switching traffic flowing between a second user interface and an ATM network interface; and an ATM connection coupling said IWF element to said ATM switch; wherein the IWF element is adapted to: receive GigE/IP traffic from said GigE/IP switch over said GigE/IP connection; recast said GigE/IP traffic into crossover ATM traffic; pass crossover ATM traffic to said ATM switch over said ATM connection; receive ATM traffic from said ATM switch over said ATM connection; recast said ATM traffic into crossover GigE/IP traffic; and pass said crossover GigE/IP traffic to said GigE/IP switch over said GigE/IP connection.

According to another aspect the invention provides for a method of hybrid IP/ATM DSL access multiplexing comprising: receiving ATM traffic at an ATM communications portion of a DSLAM; recasting said ATM traffic into crossover GigE/IP traffic at an IWF element of the DSLAM; and transmitting said crossover GigE/IP traffic from a GigE/IP communications portion of the DSLAM.

In some embodiments of the invention the step of receiving ATM traffic comprises receiving ATM traffic at one of an ATM network interface and an ATM LT card.

Some embodiments further provide for receiving GigE/IP traffic at the GigE/IP communications portion; recasting said GigE/IP traffic into crossover ATM traffic at the IWF element; and transmitting said crossover ATM traffic from the ATM communications portion over one of an ATM network interface and an ATM LT card.

According to another aspect, the invention provides for a method of hybrid IP/ATM DSL access multiplexing comprising: receiving ATM traffic at one of an ATM network interface of a DSLAM and an ATM LT card of the DSLAM; recasting said ATM traffic into crossover GigE/IP traffic at an IWF element of the DSLAM; transmitting said crossover GigE/IP traffic from a GigE/IP communications portion of the DSLAM; receiving GigE/IP traffic at the GigE/IP communications portion; recasting said GigE/IP traffic into crossover ATM traffic at the IWF element; and transmitting said crossover ATM traffic from the DSLAM over one of the ATM network interface and the ATM LT card.

According to another aspect, the invention provides for a method of providing hybrid IP/ATM DSL access multiplexing in an ATM network infrastructure, the method comprising: removing ATM hardware from an ATM DSLAM of the ATM network infrastructure; installing said ATM hardware in a hybrid IP/ATM DSLAM; and replacing said ATM DSLAM with said hybrid IP/ATM DSLAM.

In some embodiments of the invention the ATM hardware comprises an ATM LT card.

In some embodiments of the invention the step of replacing said ATM DSLAM comprises disconnecting ATM network interfaces from said ATM DSLAM, connecting said ATM network interfaces to said hybrid IP/ATM DSLAM, and connecting a GigE/IP network interface to said hybrid IP/ATM DSLAM.

According to a further embodiment the invention provides for a method of providing hybrid IP/ATM DSL access multiplexing in an ATM network infrastructure, the method comprising: removing an ATM LT card from an ATM DSLAM of the ATM network infrastructure; installing said ATM LT card in a hybrid IP/ATM DSLAM; disconnecting any ATM network interfaces from said ATM DSLAM; connecting said any ATM network interfaces to said hybrid IP/ATM DSLAM; and connecting a GigE/IP network interface to said hybrid IP/ATM DSLAM.

### BRIEF DESCRIPTION OF THE DRAWINGS

The features and advantages of the invention will become more apparent from the following detailed description of the preferred embodiment(s) with reference to the attached figures, wherein:
FIG. 1A is a block diagram of a known ATM DSLAM;
FIG. 1B is a block diagram of a known GigE/IP DSLAM;
FIG. 2 is a block diagram of a hybrid IP/ATM DSLAM according to a preferred embodiment of the invention;
FIG. 3A is a block flow diagram of hybrid IP/ATM DSL access multiplexing in which ATM traffic is recast into GigE/IP traffic according to another embodiment of the invention;
FIG. 3B is a block flow diagram of hybrid IP/ATM DSL access multiplexing in which GigE/IP traffic is recast into ATM traffic according to another embodiment of the invention; and
FIG. 4 is a block flow diagram of provisioning of hybrid IP/ATM DSL access multiplexing in an ATM network infrastructure according to a further embodiment of the invention.

It is noted that in the attached figures, like features bear similar labels.

### DETAILED DESCRIPTION OF THE PREFERRED EMBODIMENTS

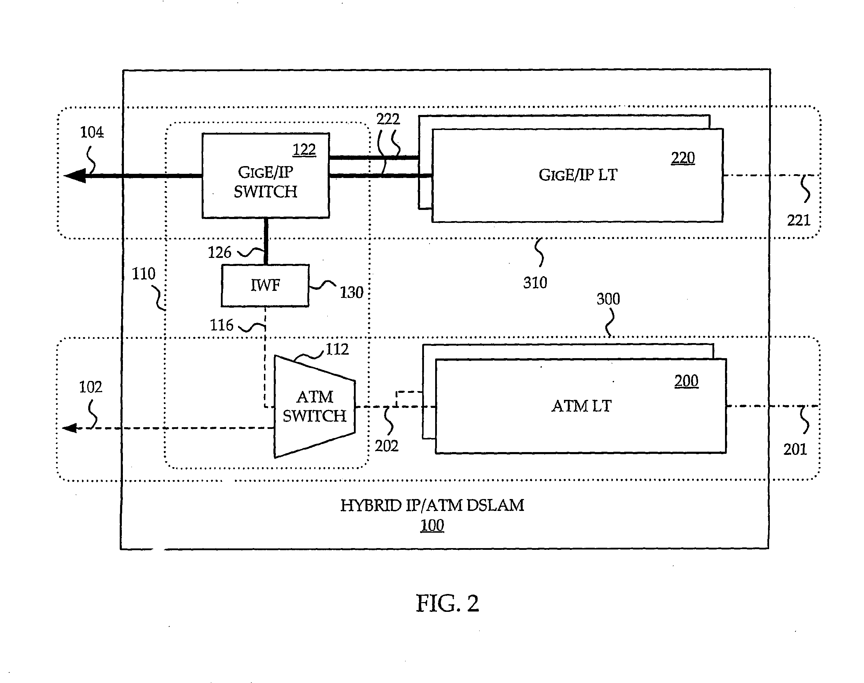

Referring to FIG. 2, a hybrid IP/ATM DSLAM 100 in accordance with the preferred embodiment of the invention will now be discussed in terms of structure.

The hybrid IP/ATM DSLAM 100 has first user interfaces 201 providing relatively low speed services such as HIS over ADSL and SHDSL to end users. First user interfaces 201 are coupled to a number of ATM LT cards 200 connected by an ATM point to multipoint bus 202 to an ATM switch 112. The ATM LT cards 200 are standard ATM LT cards that could be used in known ATM DSLAMs. The hybrid IP/ATM DSLAM 100 accepts existing ATM based hardware such as existing ATM shelving and ATM LTs. The hybrid IP/ATM DSLAM 100 has ATM based network interfaces 102 which could be for example OC12, OC3, DS3, DS1, or others. The hybrid IP/ATM DSLAM 100 supports existing ATM system interfaces. The ATM based network interfaces 102 are coupled to the ATM switch 112 in the hybrid IP/ATM DSLAM 100. The first user interfaces 201, the ATM LT cards 200, the ATM bus 202, the ATM switch 112, and the ATM based network interfaces 102 are collectively referred to as the ATM communications portion 300 of the hybrid IP/ATM DSLAM 100.

The hybrid IP/ATM DSLAM 100 has second user interfaces 221. Second user interfaces 221 are coupled to a number of GigE/IP LT cards 220 connected by a GigE/IP star bus 222 to a GigE/IP switch 122. The hybrid IP/ATM DSLAM 100 accepts existing GigE/IP based hardware such as existing GigE/IP shelving and GigE/IP LTs. The hybrid IP/ATM DSLAM 100 has multiple GigE/IP network interfaces 104 towards the network. The hybrid IP/ATM DSLAM 100 supports existing GigE/IP system interfaces. The multiple GigE/IP network interfaces 104 are coupled to the GigE/IP switch 122 in the hybrid IP/ATM DSLAM 100. The second user interfaces 221, the GigE/IP LT cards 220, the GigE/IP star bus 222, the GigE/IP switch 122, and tl e GigE/IP network interfaces 104 are collectively referred to as the GigE/IP communications portion 310 of the hybrid IP/ATM DSLAM 100.

The GigE/IP communications portion 310 is coupled to an IWF (inter-working function) element 130 by a GigE/IP connection 126 from the GigE/IP switch 122. The IWF element 130 could be a network processor element typically used in existing GigE/IP LT cards to recast ATM streams into GigE/IP streams with the added capability of recasting GigE/IP streams into ATM streams. It follows therefore that in some embodiments the IWF element 130 can be made using existing designs for hardware typically used elsewhere. The ATM communications portion 300 is coupled to the IWF element 130 over an ATM connection 116 from the ATM switch 112.

Collectively the GigE/IP switch 122, GigE/IP connection 126, the IWF element 130, the ATM connection 116, and the ATM switch 112 are referred to as the IP/ATM bridge 110.

The hybrid IP/ATM DSLAM 100 shown in Figure 2 will now be discussed in terms of function.

The ATM communications portion 300 functions as an ATM DSLAM. The ATM communications portion 300 provides services over first user interfaces 201 to end users, is designed to work with ATM network rules, and communicates with the network over its ATM based network interfaces 102 which could be OC12, OC3, DS3, and DS1, and others. The hybrid IP/ATM DSLAM 100 is capable of accepting existing ATM based hardware such as existing ATM shelving and ATM LT line cards, and provides support for existing ATM system interfaces. As such, the ATM communications portion 300 of the hybrid IP/ATM DSLAM 100 provides all of the functions of a known ATM DSLAM so that the hybrid IP/ATM DSLAM 100 is compatible with ATM network infrastructure and even provides for the re-use of existing ATM hardware such as shelving or LT cards from existing ATM DSLAMs.

The GigE/IP communications portion 310 functions as a GigE/IP DSLAM. The GigE/IP communications portion 310 provides very high speed services such as SHDSL, Voice, and VDSL to end users over second user interfaces 221 providing for services such as TV broadcasting over phone lines. The GigE/IP communications portion 310 is designed to work with GigE/IP network rules, and communicates with the network over its GigE/IP based multiple GigE/IP network interfaces 104. The hybrid IP/ATM DSLAM 100 is capable of accepting existing GigE/IP based hardware such as existing GigE/IP shelving and GigE/IP LT line cards, and provides support for existing GigE/IP system interfaces. As such, the GigE/IP communications portion 300 of the hybrid IP/ATM DSLAM 100 provides all of the functions of a known GigE/IP : DSLAM so that the hybrid IP/ATM DSLAM 100 is compatible with GigE/IP network infrastructure and even provides for the re-use of existing GigE/IP hardware such as shelving or LT cards.

The IP/ATM bridge 110 serves to pass or crossover network traffic from the GigE/IP communications portion 310 to the ATM communications portion 300 and from the ATM communications portion 300 to the GigE/IP communications portion 310. Network traffic that has crossed over the IP/ATM bridge 110 is referred to herein as crossover traffic.

In the upstream direction from the ATM communications portion 300 to the GigE/IP communications portion 310, traffic from first user interfaces 201 traverse the ATM LT cards 200 and the ATM bus 202 to the ATM switch 112 as ATM traffic. The ATM switch 112 routes the ATM traffic over the ATM connection 116 to the IWF element 130. The IWF element 130 serves to recast the ATM traffic in the form of an ATM data stream into a GigE/IP data stream generating crossover GigE/IP traffic. The crossover GigE/IP traffic traverses the GigE/IP connection 126 to the GigE/IP switch 122 where it is routed over appropriate upstream GigE/IP network interfaces 104.

In the upstream direction from the GigE/IP communications portion 310 to the ATM communications portion 300, traffic from second user interfaces 221 traverse the GigE/IP LT cards 220 and the GigE/IP star bus 222 to the GigE/IP switch 122 as GigE/IP traffic. The GigE/IP switch 122 routes the GigE/IP traffic over the GigE/IP connection 126 to the IWF element 130. The IWF element 130 serves to recast the GigE/IP traffic in the form of a GigE/IP data stream into an ATM data stream generating crossover ATM traffic. The crossover ATM traffic traverses the ATM connection 116 to the ATM switch 112 where it is routed over appropriate upstream ATM network interfaces 102.

In the downstream direction from the GigE/IP communications portion 310 to the ATM communications portion 300, GigE/IP traffic from the upstream network traverses GigE/IP network interfaces 104 to the GigE/IP switch 122 where it is routed over the GigE/TP connection 126 to the IWF element 130. As discussed above, the IWF element 130 serves to recast the GigE/IP traffic in the form of a GigE/IP data stream into an ATM data stream generating crossover ATM traffic. The crossover ATM traffic traverses the ATM connection 116 to the ATM switch 112 which routes the crossover traffic over the ATM bus 202 to the ATM LT cards 200 and over appropriate first user interfaces 201.

In the downstream direction from the ATM communications portion 300 to the GigE/IP communications portion 310, ATM traffic from the upstream network traverses ATM network interfaces 102 to the ATM switch 112 where it is routed over the ATM connection 116 to the IWF element 130. As discussed above, the IWF element 130 serves to recast the ATM traffic in the form of an ATM data stream into a GigE/IP data stream generating GigE/IP crossover traffic. The crossover GigE/IP traffic traverses the GigE/IP connection 126 to the GigE/IP switch 122 which routes the crossover GigE/IP traffic over the GigE/IP bus 222 to the GigE/IP LT cards 220 and over appropriate second user interfaces 221.

The hybrid IP/ATM DSLAM 100 has the capability of forwarding messages from the new faster uplinks towards the ATM devices and vice versa because of the IP/ATM bridge 110 between the ATM and GigE/IP communications portions 300, 310 and hence between communications platforms attached to the hybrid IP/ATM DSLAM 100.

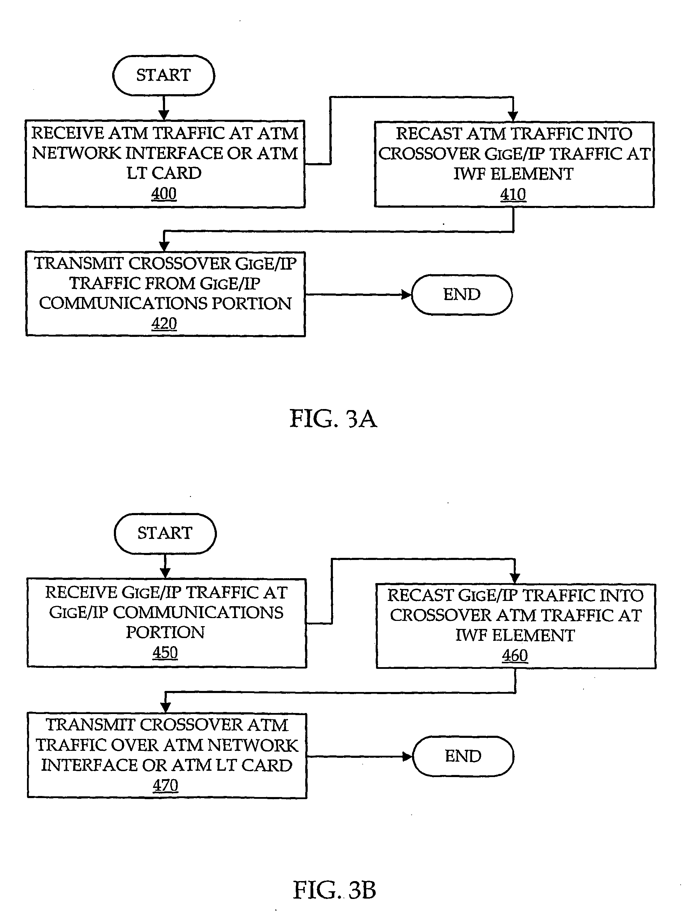

Referring also to Figures 3A and 3B, hybrid IP/ATM DSL access multiplexing in a DSLAM according to an embodiment of the invention will now be discussed.

With respect to Figure 3A in which ATM traffic is recast into GigE/IP traffic, ATM traffic is received at an ATM network interface of the DSLAM or at an ATM LT card of the DSLAM at step 400. As discussed above, receiving traffic at the ATM network interface corresponds to downstream traffic whereas receiving traffic at the ATM LT card corresponds to upstream traffic. This ATM traffic is recast into crossover GigE/IP traffic at an IWF element of the DSLAM in step 410. In step 420 the crossover GigE/IP traffic is transmitted from a GigE/IP communications portion of a DSLAM. As discussed above, transmission of traffic from a GigE/IP communications portion may be in an upstream (IP network connection) direction or downstream (user interface) direction.

With respect to Figure 3B in which GigE/IP traffic is recast into ATM traffic, GigE/IP traffic is received at a GigE/IP communications portion of a DSLAM in step 450. As discussed above, receipt of traffic at a GigE/IP communications portion may be from an upstream direction (IP network connection) or from a downstream direction (user interface). This GigE/IP traffic is recast into crossover ATM traffic at an IWF element of the DSLAM in step 460. In step 470 the crossover ATM traffic is transmitted over an ATM network interface of the DSLAM or over an ATM LT card of the DSLAM. As discussed above transmission of traffic over the ATM network interface corresponds to upstream traffic and transmission of traffic over the ATM LT card corresponds to downstream traffic.

Service providers looking to replace their large investment in existing ATM DSLAMs and ATM network infrastructure with GigE/IP DSLAMs and GigE/IP infrastructure are finding it difficult to switch due to the amount of the existing equipment and the cost such a migration from ATM to GigE/IP entails.

A migration path from ATM DSLAMs to GigE/IP DSLAMs which allows for gradual introduction and switching from the old ATM equipment to new GigE/IP based equipment is preferred as part of a DSL services migration from an ATM network infrastructure to a GigE/IP network infrastructure.

Service providers can use the hybrid IP/ATM DSLAM 100 as part of such a migration path from ATM DSLAMs to GigE/IP DSLAMs. The hybrid IP/ATM DSLAM 100 immediately brings GigE/IP DSLAM capabilities and support for GigE/IP LT line cards to an ATM infrastructure, while providing for gradual migration to a GigE/IP network infrastructure by allowing customers to re-use their existing ATM DSLAM infrastructure while replacing existing ATM DSLAMs. As hybrid IP/ATM DSLAMs 100 are introduced into the ATM network infrastructure, existing ATM hardware, services, and system interfaces are re-used with the hybrid IP/ATM DSLAMs 100 while new GigE/IP DSLAM capabilities are introduced into the network infrastructure. In this manner service providers can plan to integrate the GigE/IP based network topology into their networks without throwing away existing ATM based network topology. Most of the heavily deployed ATM based DSLAM equipment is re-used during the introduction of next generation GigE/IP DSLAM capabilities avoiding the massive economical burden that would be associated with a massive decommissioning of ATM network infrastructure resources and the simultaneous deployment of all new GigE/IP based network infrastructure.

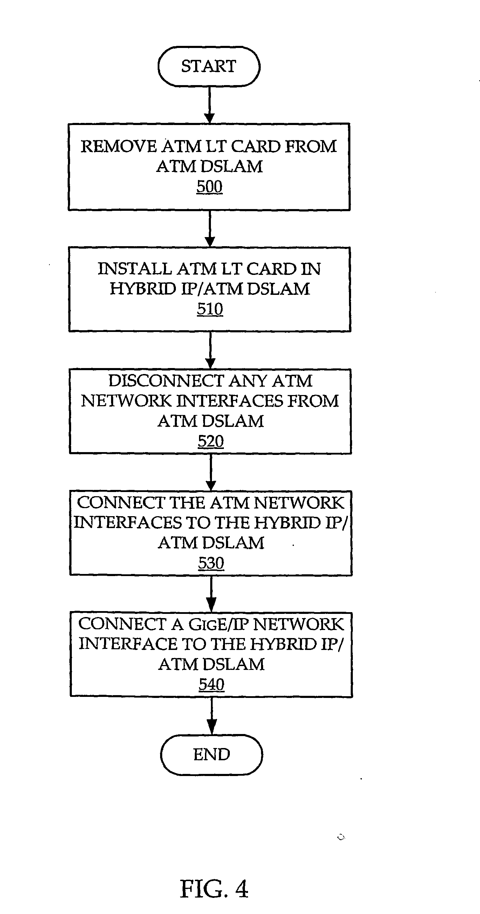

Referring also to Figure 4, provision of hybrid IP/ATM DSL access multiplexing in an ATM network infrastructure will now be discussed. At step 500 ATM hardware such as an ATM LT card is removed from an ATM DSLAM of an ATM network infrastructure. The ATM hardware (ATM LT card) is installed in a hybrid IP/ATM DSLAM at step 510. Such a step re-uses the existing ATM hardware to save costs while introducing the GigE/IP DSL access multiplexing of the hybrid IP/ATM DSLAM. At step 520, any ATM network interfaces are disconnected from the ATM DSLAM. The ATM network interfaces are then at step 530, connected to the hybrid IP/ATM DSLAM. At step 540 any new GigE/IP network interfaces are connected to the hybrid IP/ATM DSLAM.

The gradual migration path described above may also be facilitated by the hybrid IP/ATM DSLAM at a point in time if and when the ATM network infrastructure is to be replaced with solely GigE/IP based infrastructure. The hybrid IP/ATM DSLAM 100 could be phased out by removing the standard GigE/IP LTs 220 and other GigE/IP hardware from the hybrid IP/ATM DSLAM and installing them in new GigE/IP DSLAMs.

A hybrid IP/ATM DSLAM 100 incorporated into an ATM network infrastructure accommodates more traffic in its backplane to service the GigE/IP line cards but even the existing ATM LT cards benefit from the increased bandwidth of the backplane. The hybrid IP/ATM DSLAM 100 allows a customer to gain the benefits of more bandwidth, enhanced and extra features of a new GigE/IP infrastructure while allowing them to utilize their existing ATM DSLAM infrastructure, and ATM hardware.

During a transition from ATM to GigE/IP both ATM and GigE/IP network infrastructures will be present and will require support in the communications network. The hybrid IP/ATM DSLAM 100 accommodates both ATM and GigE/IP based LTs and both ATM and GigE/IP based network connections without changing existing deployment of either architecture.

The hybrid IP/ATM DSLAM 100 allows for more network interfaces than a single ATM DSLAM or GigE/IP DSLAM because it houses both an ATM communications portion and a GigE/IP communications portion, and hence houses network connections that would be found on both an ATM DSLAM and a GigE/IP DSLAM. The additional higher speed GigE/IP interfaces allow the equipment to have more bandwidth.

The hybrid IP/ATM DSLAM 100 offers flexibility to service providers as they can tune their equipment depending on the end user traffic demands. The same management of the both ATM and GigE/IP equipment within the same shelf allows the customers to migrate quicker as the learning curve is shorter.

It should be noted that the IP/ATM bridge 110 may be implemented in many different ways. According to a preferred embodiment, the GigE/IP switch 122, the GigE/IP connection 126, the IWF element 130, the ATM connection 116 and the ATM switch 112 are all part of a hybrid IP/ATM NT (network termination) card. Such a card could have onboard controllers for both the ATM and GigE/IP portions of the card and would be connected to both GigE/IP and ATM network interfaces. In other embodiments the IWF element could be implemented between a GigE/IP NT card and an ATM NT card in which either the GigE/IP NT card or the ATM NT card is a daughter card of the other. Many other implementation possibilities exist for the IP/ATM bridge 110 in accordance with the invention.

Although a GigE/IP switch, GigE/IP connection and GigE/IP network interfaces have been described in association with the preferred embodiments of the invention it is to be understood that the GigE/IP communications portion may be comprised in general of Ethernet/IP based components having an Ethernet/IP switch, an Ethernet/IP connection, and Ethernet/IP network interfaces.

## Claims

1. A hybrid IP/ATM DSLAM (100) comprising:
a GigE/IP communications portion (310) adapted to flow traffic between a first user interface (221) and a GigE/IP network interface (104);
an ATM communications portion (300) adapted to flow traffic between a second user interface (201) and an ATM network interface (102); and
an IP/ATM bridge (110) adapted to pass traffic between the GigE/IP communications portion (310) and the ATM communications portion (300),
***characterized in that*** the GigE/IP communications portion (310) comprises a GigE/IP switch (122) adapted to switch GigE/IP traffic, wherein the ATM communications portion comprises an ATM switch (112) adapted to switch ATM traffic, and wherein the IP/ATM bridge (110) comprises an inter-working function IWF, element (130) connected to said GigE/IP switch (122) and connected to said ATM switch (112), said IWF element (130) being adapted to pass network traffic between the GigE/IP switch (122) and the ATM switch (112).

2. A hybrid IP/ATM DSLAM according to claim 1 wherein the IWF element (130) is adapted to:
recast GigE/IP traffic received from the GigE/IP switch (122) into crossover ATM traffic;
recast ATM traffic received from the ATM switch (112) into crossover GigE/IP traffic;
transmit crossover ATM traffic if any to said ATM switch (112); and
transmit crossover GigE/IP traffic if any to said GigE/IP switch (122).

3. A hybrid IP/ATM DSLAM according to claim 1 wherein the ATM connection portion (300) is adapted to accept standard ATM hardware and provide a standard ATM system interface (102).

4. A hybrid IP/ATM DSLAM according to claim 3 wherein the ATM communication portion (300) comprises a standard ATM LT card slot and a standard ATM network interface (102).

5. A hybrid IP/ATM DSLAM according to claim 1 further comprising:
a GigE/IP connection (126) coupling said GigE/IP switch (122) to said IWF element (130);
an ATM connection (116) coupling said IWF element (130) to said ATM switch (112);
wherein the IWF element (130) is adapted to:
receive GigE/IP traffic from said GigE/IP switch (122) over said GigE/IP connection (126);
recast said GigE/IP traffic into crossover ATM traffic;
pass crossover ATM traffic to said ATM switch (112) over said ATM connection (116);
receive ATM traffic from said ATM switch (112) over said ATM connection (116);
recast said ATM traffic into crossover GigE/IP traffic; and
pass said crossover GigE/IP traffic to said GigE/IP switch (122) over said GigE/IP connection (126).

6. A method of hybrid IP/ATM DSL access multiplexing comprising:
flowing (420) GigE/IP traffic at a GigE/IP communications portion (310) of the DSLAM between a first user interface (221) and a GigE/IP network interface (104),
flowing (400) ATM traffic at an ATM communications portion (300) of a DSLAM between a second user interface (201) and an ATM network interface (102); and
passing (420) traffic between the GigE/IP communications portion (310) of the DSLAM and the ATM communications portion (300) of the DSLAM, through an IP/ATM bridge (110),
***characterized in that***
the step of flowing (420) GigE/IP traffic comprises switching GigE/IP traffic at a GigE/IP switch (122) of the GigE/IP communications portion (310);
the step of flowing (400) ATM traffic comprises switching ATM traffic at an ATM switch (112) of the ATM communications portion (300); and
the step of passing traffic comprises passing traffic between the GigE/IP switch (122) and the ATM switch (112) through an inter-working function IWF element (130) of the IP/ATM bridge (110).

7. A method of hybrid IP/ATM DSL access multiplexing according to claim 6 wherein the step of passing traffic between the GigE/IP switch (122) and the ATM switch (112) comprises
recasting GigE/IP traffic received from the GigE/IP switch (122) into crossover ATM traffic;
recasting ATM traffic received from the ATM switch (112) into crossover GigE/IP traffic;
wherein the step of flowing (400) ATM traffic comprises transmitting crossover ATM traffic if any to said ATM switch (112); and
wherein the step of flowing (420) GigE/IP traffic comprises transmitting crossover GigE/IP traffic if any to said GigE/IP switch (122).

## Patentansprüche

1. Hybrider IP/ATM-DSLAM (100), umfassend:
Einen GigE/IP-Verbindungsabschnitt (310), welcher für den Fluss von Verkehr zwischen einer ersten Benutzerschnittstelle (221) und einer GigE/IP-Netzwerkschnittstelle (104) ausgelegt ist;
einen ATM-Verbindungsabschnitt (300), welcher für den Fluss von Verkehr zwischen einer zweiten Benutzerschnittstelle (201) und einer ATM-Netzwerkschnittstelle (102) ausgelegt ist; und
eine IP/ATM-Brücke (110), welche für den Übergang von Verkehr zwischen dem GigE/IP-Verbindungsabschnitt (310) und dem ATM-Verbindungsabschnitt (300) ausgelegt ist,
***dadurch gekennzeichnet, dass*** der GigE/IP-Verbindungsabschnitt (310) einen GigE/IP-Switch (122) umfasst, welcher dazu ausgelegt ist, GigE/IP-Verkehr zu vermitteln, wobei der ATM-Verbindungsabschnitt einen ATM-Switch (112) umfasst, welcher dazu ausgelegt ist, ATM-Verkehr zu vermitteln, und wobei die IP/ATM-Brücke (110) ein Verknüpfungsfunktions-, IWF-Element (130) umfasst, welches an den besagten GigE/IP-Switch (122) und an den besagten ATM-Switch (112) angeschlossen ist, wobei das IWF-Element (130) dazu ausgelegt ist, Netzwerkverkehr zwischen dem GigE/IP-Switch (122) und dem ATM-Switch (112) weiterzugeben.

2. Hybrider IP/ATM-DSLAM nach Anspruch 1, wobei das IWF-Element (130) ausgelegt ist zum:
Umgestalten des von dem GigE/IP-Switch (122) empfangenen GigE/IP-Verkehrs in ATM-Übergangsverkehr;
Umgestalten des von dem ATM-Switch (112) empfangenen ATM-Verkehrs in GigE/IP-Übergangsverkehr;
Übertragen von ATM-Übergangsverkehr, soweit vorhanden, an den besagten ATM-Switch (112); und
Übertragen von GigE/IP-Übergangsverkehr, soweit vorhanden, an den besagten GigE/IP-Switch (122).

3. Hybrider IP/ATM-DSLAM nach Anspruch 1, wobei der ATM-Verbindungsabschnitt (300) dazu ausgelegt ist, standardmäßige ATM-Hardware zu akzeptieren und eine standardmäßige ATM-Systemschnittstelle (102) bereitzustellen.

4. Hybrider IP/ATM-DSLAM nach Anspruch 3, wobei der ATM-Verbindungsabschnitt (300) einen standardmäßigen ATM-LT-Kartenschlitz und eine standardmäßige ATM-Netzwerkschnittstelle (102) umfasst.

5. Hybrider IP/ATM-DSLAM nach Anspruch 1, weiterhin umfassend:
Einen GigE/IP-Anschluss (126), welcher den besagten GigE/IP-Switch (122) an das besagte IWF-Element (130) koppelt;
einen ATM-Anschluss (116), welcher das besagte IWF-Element (130) an den besagten ATM-Switch (112) koppelt;
wobei das IWF-Element (130) ausgelegt ist für:
den Empfang von GigE/IP-Verkehr von dem besagten GigE/IP-Switch (122) über die besagte GigE/IP-Verbindung (126);
die Umgestaltung des besagten GigE/IP-Verkehrs in ATM-Übergangsverkehr;
die Weitergabe von ATM-Übergangsverkehr an den besagten ATM-Switch (112) über die besagte ATM-Verbindung (116);
den Empfang von ATM-Verkehr von dem besagten ATM-Switch (112) über die besagte ATM-Verbindung (116);
die Umgestaltung des besagten ATM-Vekehrs in GigE/IP-Übergangsverkehr; und
die Weitergabe des besagten GigE/IP-Übergangsverkehrs an den besagten GigE/IP-Switch (122) über die besagte GigE/IP-Verbindung (126).

6. Zugangsmultiplexing-Verfahren für einen hybriden IP/ATM-DSL, umfassend:
Fließen (420) von GigE/IP-Verkehr an einem GigE/IP-Verbindungsabschnitt (310) des DSLAM zwischen einer ersten Benutzerschnittstelle (221) und einer GigE/IP-Benutzerschnittstelle (104),
Fließen (400) von ATM-Verkehr an einem ATM-Verbindungsabschnitt (300) eines DSLAM zwischen einer zweiten Benutzerschnittstelle (201) und einer ATM-Netzwerkschnittstelle (102); und
Weitergeben (420) von Verkehr zwischen dem GigE/IP-Verbindungsabschnitt (310) des DSLAM und dem ATM-Verbindungsabschnitt (300) des DSLAM über eine IP/ATM-Brücke (110),
***dadurch gekennzeichnet, dass***
der Schritt des Fließens (420) von GigE/IP-Verkehrs das Vermitteln von GigE/IP-Verkehr an einem GigE/IP-Switch (122) des GigE/IP-Verbindungsabschnitts (310) umfasst;
der Schritt des Fließens (400) von ATM-Verkehr das Vermitteln von ATM-Verkehr an einem ATM-Switch (112) des ATM-Verbindungsabschnitts (300) umfasst; und
der Schritt des Weitergebens von Verkehr das Weitergeben von Verkehr zwischen dem GigE/IP-Switch (122) und dem ATM-Switch (112) über ein Verknüpfungsfunktions-, IWF-Element (130) der IP/ATM-Brücke (110) umfasst.

7. Zugangsmultiplexing-Verfahren für einen hybriden IP/ATM-DSL nach Anspruch 6, wobei der Schritt des Weitergebens von Verkehr zwischen dem GigE/IP-Switch (122) und dem ATM-Switch (112) umfasst:
Umgestalten des von dem GigE/IP-Switch (122) empfangenen GigE/IP-Verkehrs in ATM-Übergangsverkehr;
Umgestalten des von dem ATM-Switch (112) empfangenen ATM-Verkehrs in GigE/IP-Übergangsverkehr;
wobei der Schritt des Fließens (400) von ATM-Verkehr das Übertragen von ATM-Übergangsverkehr, soweit vorhanden, an den besagten ATM-Switch (112) umfasst; und
wobei der Schritt des Fließens (420) von GigE/IP-Verkehr das Übertragen von GigE/IP-Übergangsvekehr, soweit vorhanden, an den besagten GigE/IP-Switch (122) umfasst.

## Revendications

1. DSLAM IP/ATM hybride (100) comprenant :
une partie de communication GigE/IP (310) adaptée pour faire circuler le trafic entre une première interface utilisateur (221) et une interface réseau GigE/IP (104) ;
une partie de communication ATM (300) adaptée pour faire circuler le trafic entre une deuxième interface utilisateur (201) et une interface réseau ATM (102) ; et
un pont IP/ATM (110) adapté pour acheminer le trafic entre la partie de communication GigE/IP (310) et la partie de communication ATM (300),
***caractérisé en ce que*** la partie de communication GigE/IP (310) comprend un commutateur GigE/IP (122) adapté pour commuter le trafic GigE/IP, dans lequel la partie de communication ATM comprend un commutateur ATM (112) adapté pour commuter le trafic ATM, et dans lequel le pont IP/ATM (110) comprend un élément de fonction d'interfonctionnement, IWF, (130) connecté audit commutateur GigE/IP (122) et connecté audit commutateur ATM (112), ledit élément IWF (130) étant adapté pour acheminer le trafic du réseau entre le commutateur GigE/IP (122) et le commutateur ATM (112).

2. DSLAM IP/ATM hybride selon la revendication 1 dans lequel l'élément IWF (130) est adapté pour :
rediffuser le trafic GigE/IP provenant du commutateur GigE/IP (122) en trafic ATM transversal ;
rediffuser le trafic ATM provenant du commutateur ATM (112) en trafic GigE/IP transversal ;
transmettre le trafic ATM transversal, s'il en existe, audit commutateur ATM (112) ; et
transmettre le trafic GigE/IP transversal, s'il en existe, audit commutateur GigE/IP (122).

3. DSLAM IP/ATM hybride selon la revendication 1 dans lequel la partie de communication ATM (300) est adaptée pour accepter le matériel ATM standard et fournir une interface système ATM standard (102).

4. DSLAM IP/ATM hybride selon la revendication 3 dans lequel la partie de communication ATM (300) comprend une fente pour carte ATM LT standard et une interface réseau ATM standard (102).

5. DSLAM IP/ATM hybride selon la revendication 1 comprenant en outre :
une connexion GigE/IP (126) couplant ledit commutateur GigE/IP (122) audit élément IWF (130) ;
une connexion ATM (116) couplant ledit élément IWF (130) audit commutateur ATM(112);
dans lequel l'élément IWF (130) est adapté pour :
recevoir le trafic GigE/IP provenant dudit commutateur GigE/IP (122) sur ladite connexion GigE/IP (126) ;
rediffuser ledit trafic GigE/IP en trafic ATM transversal ;
acheminer le trafic ATM transversal vers ledit commutateur ATM (112) sur ladite connexion ATM (116) ;
recevoir le trafic ATM provenant dudit commutateur ATM (112) sur ladite connexion ATM (116) ;
rediffuser ledit trafic ATM en trafic GigE/IP transversal ; et
acheminer ledit trafic GigE/IP transversal vers ledit commutateur GigE/IP (122) sur ladite connexion GigE/IP (126).

6. Procédé de multiplexage d'accès DSL IP/ATM hybride comprenant :
faire circuler (420) le trafic GigE/IP au niveau d'une partie de communication GigE/IP (310) du DSLAM entre une première interface utilisateur (221) et une interface réseau GigE/IP (104),
faire circuler (400) le trafic ATM au niveau d'une partie de communication ATM (300) d'un DSLAM entre une deuxième interface utilisateur (201) et une interface réseau ATM (102) ; et
acheminer (420) le trafic entre la partie de communication GigE/IP (310) du DSLAM et la partie de communication ATM (300) du DSLAM, par l'intermédiaire d'un pont IP/ATM (110),
***caractérisé en ce que***
l'étape de circulation (420) du trafic GigE/IP comprend la commutation du trafic GigE/IP au niveau d'un commutateur GigE/IP (122) de la partie de communication GigE/IP (310) ;
l'étape de circulation (400) du trafic ATM comprend la commutation du trafic ATM au niveau d'un commutateur ATM (112) de la partie de communication ATM (300) ; et
l'étape d'acheminement du trafic comprend l'acheminement du trafic entre le commutateur GigE/IP (122) et le commutateur ATM (112) par l'intermédiaire d'un élément de fonction d'interfonctionnement, IWF, (130) du pont IP/ATM (110).

7. Procédé de multiplexage d'accès DSL IP/ATM hybride selon la revendication 6 dans lequel l'étape d'acheminement du trafic entre le commutateur GigE/IP (122) et le commutateur ATM (112) comprend
la rediffusion du trafic GigE/IP provenant du commutateur GigE/IP (122) en trafic ATM transversal ;
la rediffusion du trafic ATM provenant du commutateur ATM (112) en trafic GigE/IP transversal ;
dans lequel l'étape de circulation (400) du trafic ATM comprend la transmission du trafic ATM transversal, s'il en existe, vers ledit commutateur ATM (112) ; et
dans lequel l'étape de circulation (420) du trafic GigE/IP comprend la transmission du trafic GigE/IP transversal, s'il en existe, vers ledit commutateur GigE/IP (122).
